# EUROPEAN PATENT APPLICATION

(11) **EP 3 306 322 A1**
(43) Date of publication of application: **11.04.2018**
(21) Application number: 16002138.2
(22) Date of filing: 05.10.2016
(51) Int. Cl.: G01N 35/00, B01L 3/00

(54) **METHOD OF CONDUCTING CONTINUOUS ASSAYS**

(71) Applicant: Rheinisch-Westfälische Technische Hochschule (RWTH) Aachen, 52056 Aachen (DE)
(72) Inventor: Brinkmann, Markus, 52074 Aachen (DE); Thalmann, Beat, 69115 Heidelberg (DE); Schiwy, Andreas, 52064 Aachen (DE); Hollert, Henner, 69493 Hirschberg (DE)
(74) Representative: Müller-Boré & Partner Patentanwälte PartG mbB

(57) **Abstract**

The present invention relates to a method of conducting continuous assays, preferably bioassays comprising the steps of providing one or more samples into a recess of a carrier tape, adding one or more detecting agents to the sample(s) to give a mixture, sealing the mixture comprising the sample(s) and the detecting agent(s) with a cover film, incubating the sealed mixture,and analysing the sealed and incubated mixture by detections means.

## Description

The present invention relates to a method of conducting continuous assays, preferably bioassays.

Assays, especially bioassays, can e.g. be used for determining the effects of single substances (e.g. chemicals and pharmaceuticals to be evaluated), complex samples (e.g. environmental samples, natural medicines) or other treatments (e.g. with pathogens). The ideal assay would be quick, cheap, sensitive, and specific. Many bioassays, especially those with permanent cell cultures, fulfill these conditions and therefore represent important alternatives to animal testings. However, previously known methods can merely be conducted in a discontinuous manner. Thus, a set of samples is commonly placed in a multiwell plate, provided with cells, test organisms etc., incubated, and subsequently examined and analyzed. Therefore, the smallest unit of such methods is a multiwell plate, which needs to be handled separately. Automation efforts are currently commonly limited to a robotic handling of the plates in combination with liquid handling robots.

Discontinuous testing methods extensively limit the possible throughput and are the cause of a great load of duroplastic wastes, resulting in unnecessary costs and impacts on the environment. Moreover, a comparably large amount of working hours are needed for carrying out discontinuous testing methods and said methods can rarely be used on-line.

Thus, the technical problem underlying the present invention is to provide a method which is able of conducting assays, preferably bioassays, in a continuous manner.

The solution to the above technical problem is achieved by the embodiments characterized in the claims.

In particular, the present invention relates to a method of conducting continuous assays comprising the steps of
a) providing one or more samples into a recess of a carrier tape,
b) adding one or more detecting agents to the sample(s) to give a mixture,
c) sealing the mixture comprising the sample(s) and the detecting agent(s) with a cover film,
d) incubating the sealed mixture,
e) analyzing the sealed and incubated mixture by detections means.

The term "assay" as used herein does not have any specific limitations, and relates, for example, to at least one member selected from bioassay, ligand binding assay, immunoassay, biochemical assay (e.g. for the determination of protein or nucleic acid concentrations), cell viability and proliferation assay, enzyme activity assay, and biomedical assays (e.g. hormone, dioxin-resembling, receptor-binding, neurological, cardiological, biotransformation, and metabolic assays). Preferably, the assay is selected from the group consisting of bioassay, biochemical assay, cell viability and proliferation assay, enzyme activity assay, and biomedical assay. Most preferably, the assay is a bioassay.

According to the present invention, the method comprises a step a) of providing one or more samples into a recess of a carrier tape. The sample(s), which is/are provided into a recess of a carrier tape in step a) of the present invention is/are not specifically limited, and thus relate(s) to any sample(s) known in the art, which may optionally be dissolved in a medium for example. Examples of samples are, water samples (e.g. drinking water, surface water, and waste water samples), samples taken from a mammal (e.g. blood, urine, and stool samples), samples taken from biotechnological processes (e.g. bioreactor samples), pharmaceutical samples (e.g. screening libraries and antibiotics), chemical samples (e.g. environmental chemicals and toxicants), bacterial samples, fungal samples, eukaryotic samples, complex samples (e.g. environmental samples and natural medicines), fractions of protein and/or nucleic acid mixtures, and pathogens. The number of samples provided in a recess of a carrier tape in step a) of the present invention is not particularly limited. For example, one to six samples, preferably one to four samples, more preferably one or two samples, and most preferably one sample is/are provided in a recess of a carrier tape in step a) of the present invention.

Moreover, the method according to the present invention further comprises a step b) of adding one or more detecting agents to the sample(s) to give a mixture. The detecting agent(s) added to the sample(s) to give a mixture comprising the detecting agent(s) and the sample(s) is/are not specifically limited, and thus relate(s) to any detecting agent(s) known in the art, which may optionally be dissolved in a medium for example. Examples of detecting agent(s) are wildtype or transgenic (e.g. carrying reporter genes) eukaryotic cells, bacteria, fungi, dyes (e.g. trypan blue), chemical complexes (e.g. BCA solution), enzyme substrates and co-substrates, and solutions for detection of reporter gene expression (e.g. luciferase, galactosidase). The number of detecting agents added to the sample(s) in step b) of the present invention is not particularly limited. For example, one to six detecting agents, preferably one to four detecting agents, more preferably one or two detecting agents, and most preferably one detecting agent is/are added to the sample(s) in step b) of the present invention.

A given sample may either be directly provided in step a) or may be dissolved in a (culture) medium to give a sample provided in step a). Likewise, the detecting agent(s) added in step b) may also be either directly added to the sample(s) or may be dissolved in a (culture) medium before being added to the sample(s). Moreover, a medium may already be present in the recess of the carrier tape before step a) or may be added between step a) and step b), between step b) and step c), before the mixture is sealed, and/or may not be further added. The (culture) medium is not particularly limited and suitable (culture) media are known in the art. For example, the medium may be an aqueous medium, a medium based on one or more organic solvents, or a medium based on a mixture of water with one or more organic solvents. Preferably, the medium is obtained from one or more selected from the group consisting of water, DMSO, ethanol, methanol, isopropanol, chloroform, DMF, dioxane, THF, acetonitrile and ethyl acetate. More preferably, the medium is obtained from one or more selected from the group consisting of water, DMSO, ethanol, acetonitrile and ethyl acetate. The medium may differ for each of the given sample(s), the detecting agent(s), and the potentially already present medium in step a) as well as the potentially added media between step a) and step b), between step b) and step c), and before the mixture is sealed. Preferably, the same medium is used.

The medium may comprise e.g. salts and substrates and may have a specific pH. For example, enzyme substrates and co-substrates, buffer components, nutrients for growth of cellular detection agents, antibodies, and proteins may be comprised in the medium.

Furthermore, the method according to the present invention may further comprise step a1) and/or step b1) of applying nitrogen or other inert gasses to the filled recess. By applying aformentioned gas to the filled recess, the amount of the medium may be reduced or the medium may be fully evaporated. When present, step a1) is conducted between step a) and step b). Moreover, step b1), when present, is conducted between step b) and step c).

In case the sample(s) and/or the detecting agent(s) is/are a chemical compound or element, the concentration of said chemical compound or element in the medium (after sealing) is not particularly limited. For example, the concentration may be from 1.0 ng/L to 10 g/L, preferably from 5.0 ng/L to 1.0 g/L, from 100 ng/L to 500 mg/L, and most preferably from 1.0 µg/L to 100 mg/L.

In case the sample(s) and/or the detecting agent(s) is/are cells, such as eukaryotic or bacterial cells, the concentration of said cells in the medium (after sealing) is not particularly limited. For example, the concentration may be from 10² to 10⁸ cells/mL, preferably from 10³ to 10⁶ cells/mL, from 1.0 to 10 x 10⁵ cells/mL, and most preferably from 2.0 to 5.0 x 10⁵ cells/mL.

Before being either directly provided in step a) or being dissolved in a medium, a given sample may be subjected to specific treatments, such as e.g. chemical, physicochemical, and biological treatments. For example, a given sample may be purified by chromatographic means, such as HPLC, SPE, GPC/SEC, affinity chromatography, and IEC. In case the sample is a complex sample, e.g. a complex environmental sample, said sample may preferably be separated into different fractions by e.g. a HPLC system and the different fractions may be provided to different recesses of the carrier tape and analyzed separately.

The means by which the sample(s) are provided to a recess in step a) and by which the detecting agent(s) are added to the samples in step b) are not particularly limited. For example, automated sampling units or dilution systems as known from the art may independently be used.

In one preferred embodiment of the present invention, the sample(s) are selected from the group consisting of water samples, pharmaceutical samples, chemical samples, complex samples, and pathogens. Preferably, the one or more detecting agents are selected from the group consisting of eukaryotic cells, bacteria, and fungi.

In another preferred embodiment of the present invention, the sample(s) are selected from the group consisting of samples taken from a mammal, samples taken from biotechnological processes, bacterial samples, fungal samples, eukaryotic samples. Preferably, the one or more detecting agents are selected from the group consisting of dyes and chemical complexes.

The carrier tape which is used in the present invention is not particularly limited, as long as it comprises recesses in which the sample(s) and the detecting agent(s) are provided. For example carrier tapes as known from e.g. the field of electronics, in which e.g. SMD elements are provided to soldering robots, can be used. Preferably, the carrier tape comprises advancement structures, such as (sprocket) holes and/or notches, which can be used for transporting/advancing the carrier belt along an assembly for conducting the continuous assay of the present invention by means of e.g. sprockets which engage with the advancement structures. The location of the advancement structures is not particularly limited. For example, the advancement structures may be provided along one or both, preferably one, longitudinal edge(s) of the carrier tape. The carrier tape may or may not possess holes on the bottom of the corresponding recesses. In a preferred embodiment, the carrier tape which is used in the present invention possess holes on the bottom of the recesses. The dimension of the holes is not particularly limited. For example, the holes may have a diameter of from 10 µm to 5.0 mm, preferably from 100 µm to 2.0 mm, and most preferably from 500 µm to 1.0 mm. The holes may have a circular shape. When present, the holes are preferably sealed with the cover film, preferably from the bottom of the carrier tape, in the same way as the top of the carrier tape as described hereinafter. The holes are preferably sealed before providing the sample to the corresponding recesses of the carrier tape.

The dimensions of the carrier tape and the corresponding recesses are not particularly limited and may be adapted according to the volume needed for storing the mixture of the sample(s) and the detecting agent(s), thereby considering a potential reduction of the used media e.g. by means of nitrogen gas application. For example, the volume offered by each recess of the carrier tape may be from 1.0 µL to 10 mL, preferably from 10 µL to 5.0 mL, from 20 µL to 2.0 mL, and most preferably from 50 µL to 200 µL. Moreover, the width of the carrier tape may for example be from 4.0 to 100 mm, preferably from 5.0 to 50 mm, and most preferably from 8.0 to 25 mm. The advancement structures may have a diameter of from 10 µm to 10 mm, preferably from 100 µm to 5.0 mm, and most preferably from 1.0 to 2.0 mm. Furthermore, the space between two consecutive advancement structures may be from 50 µm to 50 mm, preferably from 500 µm to 20 mm, and most preferably from 2.0 to 6.0 mm. The (roll) length of each of the carrier tape and the cover film may each independently be from 1.0 cm to 1000 m, preferably from 10 cm to 300 m, and most preferably from 1.0 m to 100 m.

The carrier tape and the cover film according to the present invention may independently be made of any suitable material including, for example, polymeric materials, preferably thermoplastic polymeric materials, and/or metal foil. Preferably, the materials should be dimensionally stable, durable, and readily formable into a desired configuration. Preferably, the material comprises a thermoplastic polymeric material that has a sufficient thickness and flexibility to permit it to be wound about the hub of a storage reel. Suitable thermoplastic polymeric materials include, but are not limited to, polyesters (e.g., glycol-modified polyethylene terephthalate, or polybutylene terephthalate), polycarbonate, polystyrene, polyvinyl chloride, acrylonitrile-butadiene-styrene, amorphous polyethylene terephthalate, polyamide, polyolefins (e.g., polyethylene, polypropylene, polybutene, or polyisobutene), modified poly(phenylene ether), polyurethanes, polydimethylsiloxane, and polyolefin copolymers. The carrier tape and the cover film may be optically clear or pigmented. Preferably, the carrier tape and the cover film are optically clear. Optically clear carrier tapes and cover films preferably ensure that the incubated mixture can be satisfactorily analyzed by e.g. optical detection means. In addition, additives such as dyes, colorants, pigments, and UV stabilizers, preferably UV stabilizers, may be added to the resin material before forming the carrier tape and the cover film, respectively.

The carrier tape and the cover film may each independently be gas-tight or gas permeable. In a preferred embodiment, the carrier tape is gas-tight. Preferably, the cover film is gas permeable, e.g. specifically treated thermoplastic polymeric materials or rayon. Moreover, it is preferred that the carrier tape and the cover film are wound about the hub of storage reels and provided therefrom.

Moreover, the cover film may be coated (on one side) with adhesives, such as heat-activated and/or pressure-sensitive adhesives, for adhering the cover film to the carrier tape and sealing the filled recess. Suitable heat-activated or pressure-sensitive adhesives are known in the art. For example, a pressure-sensitive adhesive such as an acrylate based adhesive strip, or a heat-activated adhesive such as an ethylenevinyl acetate copolymer may be coated onto one surface of the cover film. Preferably, the adhesives are disposed along the longitudinal edges of the cover film.

The method according to the present invention further comprises a step c) of sealing the mixture comprising the sample(s) and the detecting agent(s) with a cover film. The method for sealing the mixture is not specifically limited and suitable methods for sealing recesses of carrier tapes are known in the art. For example, the sealing may be achieved by disposing the cover film on the carrier tape such that the filled recess(es) is/are fully covered and adhering the cover film to the carrier tape e.g. by means of heat-activated and/or pressure-sensitive adhesives. The method for pressure- and/or heat-sealing carried tapes with cover films by means of adhesives is not particularly limited. Thus, any method known from e.g. the field of electronics can be used. Preferably, the mixture is pressure-sealed in step c). The applied pressure and/or heat for adhering the cover film to the carrier tape is/are not specifically limited. The cover film is preferably continuously applied (e.g. as one sheet) on the carrier tape. Moreover, the cover film is preferably applied in such a way that the contents of neighboring filled recesses cannot mix with each other.

Furthermore, the method according to the present invention further comprises a step d) of incubating the sealed mixture. The incubation method is not specifically limited and corresponding methods are known in the art. Incubation in step d) may comprise using a temperature-controlled incubation chamber and/or a chamber to prevent ambient light to reach the incubation mixture, or incubation may be performed under ambient conditions. For example, the sealed mixture may be incubated in step d) at a temperature from 4 to 95°C, preferably from 10 to 65°C, from 20 to 50°C, and most preferably from 25 to 37°C. Moreover, the duration of the incubation in step d) may be from 1 s to 120 h, preferably from 10 s to 24 h, from 30 s to 1 h, and most preferably from 1 to 10 min. Additionally, the atmosphere in the temperature-controlled incubation chamber may be humidified to prevent evaporation of the constituents of media or detection agents, or enriched with gases, such as carbon dioxide as may be necessary with certain buffer systems.

The method according to the present invention further comprises a step e) of analyzing the sealed and incubated mixture by detections means. The detections means for analyzing the sealed and incubated mixture are not specially limited. Thus, any known analytical method known in the art can be used for analyzing the sealed and incubated mixture. The detection may be performed through but is not limited to analysis of transmitted or reflected light, fluorescence, and luminescence. Examples of suitable detection means are but are not limited to the group consisting of UV-Vis detectors, fluorescence detectors, luminescence detectors, and microscope cameras. UV-Vis detectors may be operated at wavelengths from 220 to 1000 nm, fluorescence detectors at excitation wavelengths from 230 to 850 nm and emission wavelengths from 250 to 850 nm, luminescence detectors with any photon counting systems known in the art, and microscopic systems using transmitted or reflected light, light or fluorescence microscopy, and magnifications from 10- to 1000-fold.

Previously known discontinuous testing methods, which mostly rely on multiwell plates, extensively limited the possible throughput and are the cause of a great load of duroplastic wastes, resulting in unnecessary costs and impacts on the environment. Moreover, a comparably large amount of working hours are needed for carrying out previously known testing methods and said methods can rarely be used on-line.

In contrast thereto, carrier tapes are used in the present invention for carrying out assays, preferably bioassays, which are preferably provided on site with the test sample(s) and the detecting agent(s). By providing the assays on-site it is preferably possible to avoid pre-filled plastic tapes etc., resulting in an advantageously increased versatility of the process (and of the resulting product). The mixture(s) is/are incubated and finally analyzed. This advantageously renders the possibility of continuous testing (off- as well as on-line), increases the throughput, significantly reduces the working hours, allows a higher standardization, and produces much less duroplastic waste than previously known conventional methods. The method of the present invention is advantageously able to continuously analyze test samples, preferably by means of a bioassay. For example, it is possible to automatically test e.g. chemicals (e.g. in toxicological screenings), fractions of complex environmental samples, or compound libraries (e.g. in the pharmaceutical industry), and to online test e.g. water, such as drinking and surface water, processes e.g. biotechnological process (e.g. including bioreactors), and to evaluate concentrations of e.g. proteins (e.g. when purifying proteins, e.g. downstream processing), glucose, phosphate, lipid peroxides, and reactive oxygen species. Due to its high simplicity and versatility the method of the present invention can not only be used in laboratories, but e.g. also in waterworks, at monitoring stations, or in a hospital.

The figures show:

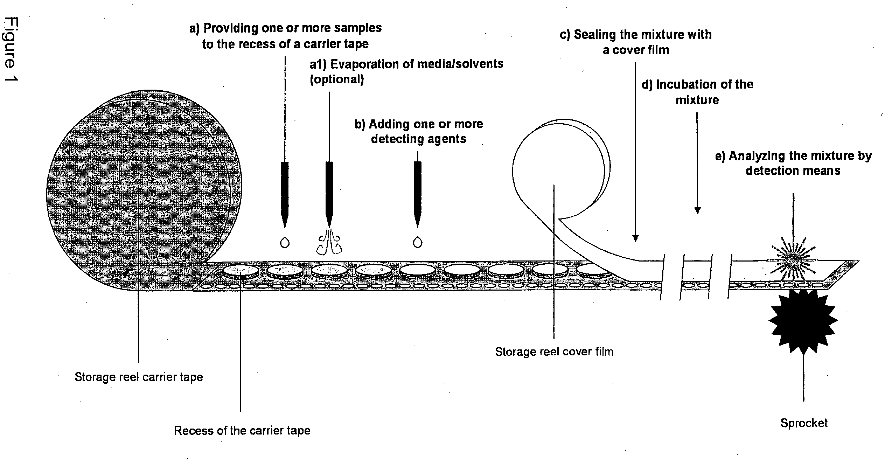

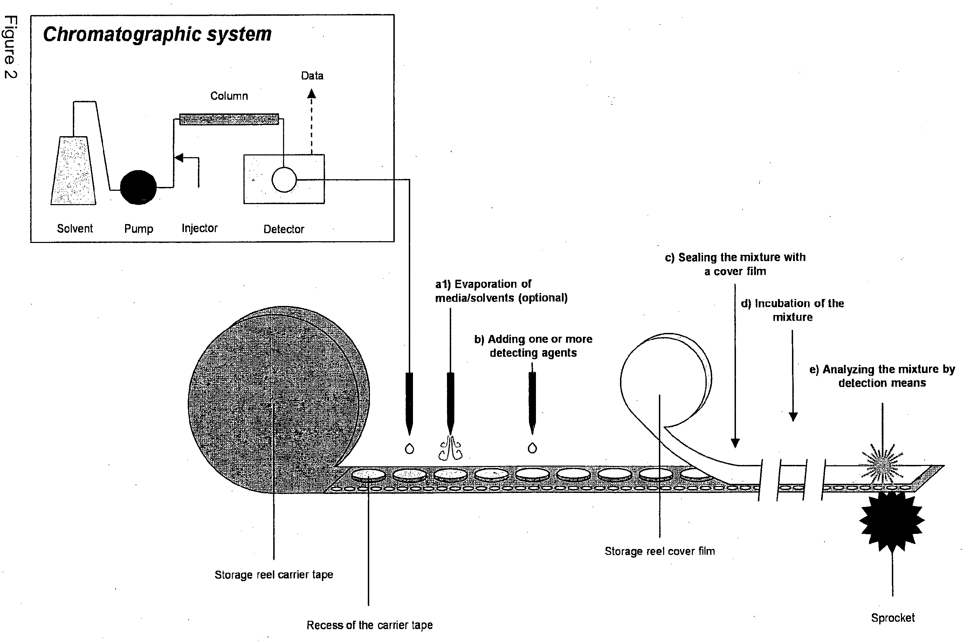

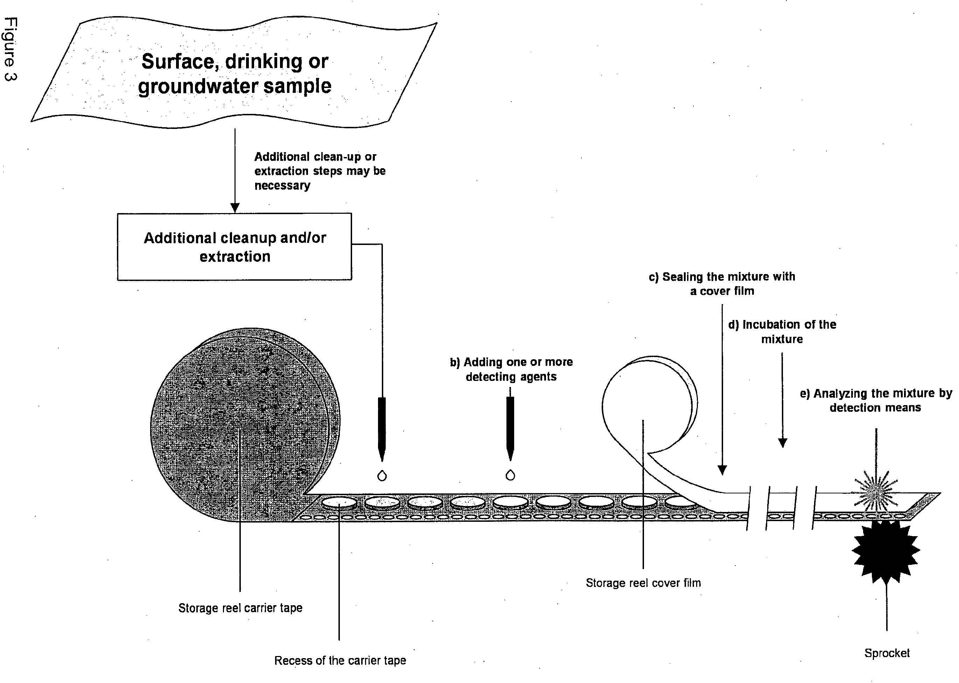

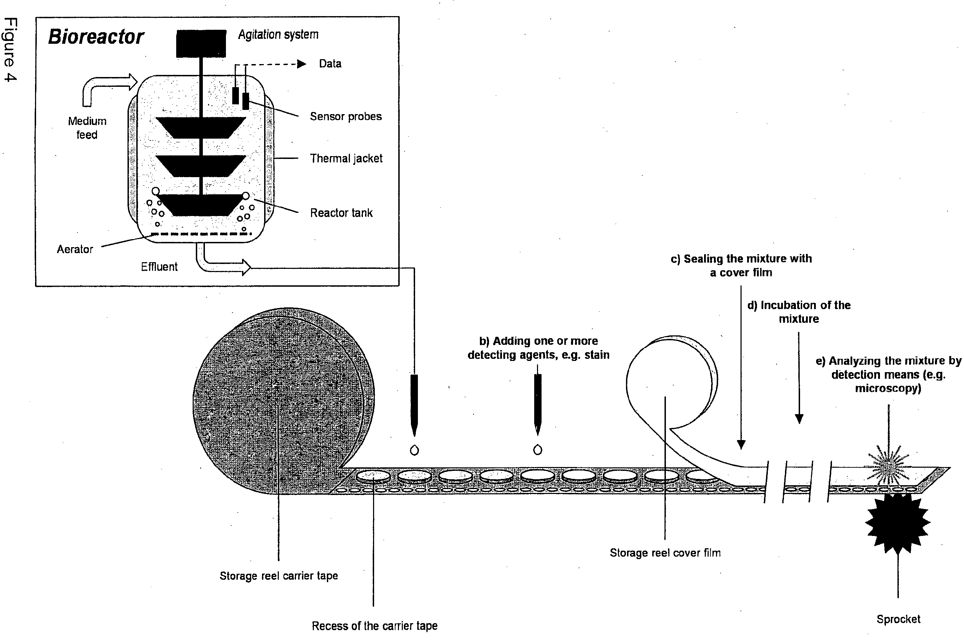

Figures 1 to 4: Examples of assemblies for performing the method according to the present invention e.g. with a complex mixture as a sample which has been separated by e.g. HPLC before being provided in the carrier tape (cf. Figure 2), or with a water sample, such as a drinking or surface water sample, which is optionally pretreated before being provided in the carrier tape (cf. Figure 3), or with a sample taken from a bioreactor allowing the on-line control of biotechnological processes (cf. Figure 4).
Figure 5: Test regarding the growth inhibition of algae at different concentrations of potassium dichromate.
Figure 6: Antibiotic growth inhibition of bacteria (*Salmonella typhimurium;* top picture) and yeast (*Saccharomyces cerevisiae,* bottom picture) following incubation with different concentrations of penicillin/streptomycin and geneticin (G-418), respectively.
Figure 7: Cytotoxicity test with H4IIE cells and resazurin
Figure 8: Protein detection assay

The present invention will be further illustrated in the following examples without being limited thereto.

### General

The carrier tapes used throughout the study were commercially available tape and reel carrier tapes as they are known in the art of electronics, e.g. to provide SMD parts to automated soldering robots. These embossed tapes were 8 mm wide and were equipped with pinches/sprocket holes (1.5 mm diameter) on one side of the tape every 4 mm. The embossed cavities were 1.25 mm high, 2.26 mm wide and 1.80 mm deep, and contained holes (0.8 mm) on the bottom. Both the holes, as well as the carrier tapes (after providing samples and detection agents) were sealed using commercially available sealing sheets for cell culture purposes (Thermo Fisher Scientific) as cover films. Both samples and detection agents were provided into the recesses of the carrier tapes using microvolume pipettes.

### Example 1: Growth inhibition test with algae

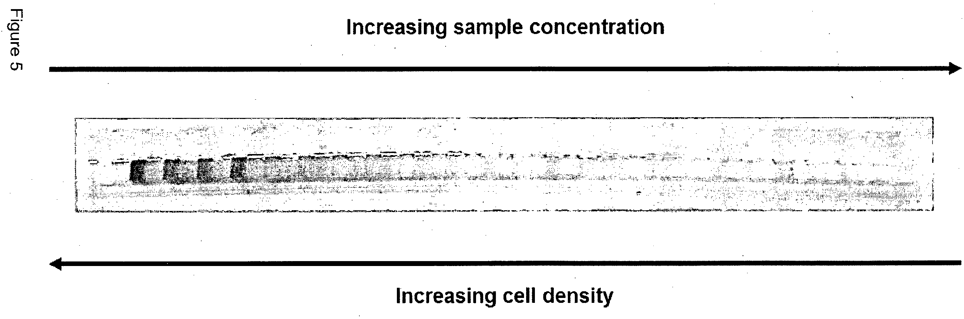

Samples of different concentrations (2-fold serial dilutions, starting at 200 mg/L) of potassium dichromate in OECD growth medium were provided in consecutive recesses (recess volume: 4 µL) of a carrier tape. To each of said recesses were added similar amounts or pre-cultures of *D. suspicatus* (resulting final cell density of 5,000 cells/mL prior to incubation) as the respective detection agent (for testing the growth inhibitory effect of potassium dichromate). The recesses filled with the mixtures were sealed with a cover film. After incubation (72 h at 23±2°C, illumination), it was observed that the cell density decreased with increasing potassium dichromate concentration (cf. Figure 5).

### Example 2: Antibiotic growth inhibition test with different bacteria

Samples of different concentrations of a mixture of penicillin and streptomycin (2-fold serial dilutions, starting at 1,000 units penicillin and 1 mg streptomycin/mL), were provided in consecutive rows of recesses (recess volume: 4 µL) of a carrier tape. To each of said recesses were added similar amounts of *Salmonella typhimurium* as the respective detection agent (for testing the antibiotic growth inhibitory effect of the mixture of penicillin and streptomycin). Similarly, samples of different concentrations of geneticin (2-fold serial dilutions, starting at 100 mg/mL) were provided in consecutive recesses (recess volume: 4 µL) of a carrier tape and to each of said recesses were added similar amounts of *Saccharomyces cerevisiae* as the respective detection agent (for testing the growth inhibitory effect of geneticin).

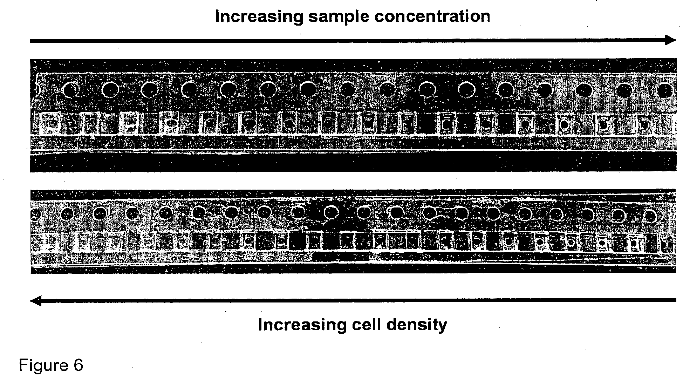

The recesses filled with the mixtures were sealed with a cover film. After 48 h incubation at 37°C and 28°C, respectively, it was observed that the cell density of *Salmonella typhimurium* and *Saccharomyces cerevisiae,* respectively, decreased with increasing concentration of the respective antibiotic (cf. Figure 6).

### Example 3: Viability test with H4IIE cells and resazurin

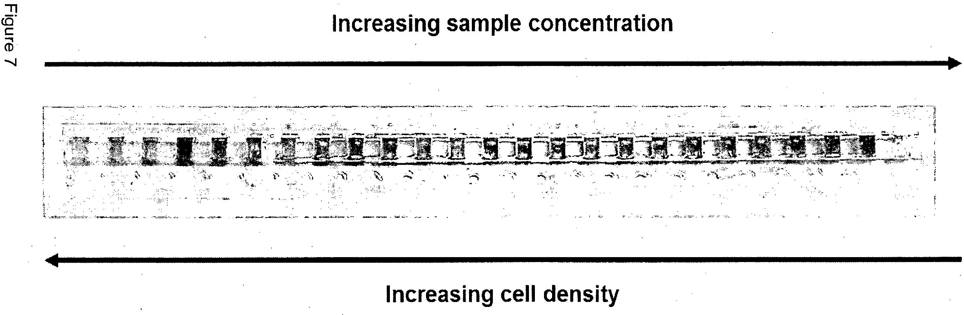

Graded concentration of H4IIE cells (2-fold serial dilutions starting at 50,000 cells/mL) were provided in consecutive recesses (recess volume: 4 µL) of a carrier tape. To each of said recesses were added similar amounts of Resazurin as the respective detection agent (for testing the viability of H4IIE cells, as represented through the different cell numbers). The recesses filled with the mixtures were sealed with a cover film. After incubation for 2 hours at 37°C, it was observed that the conversion of blue resazurin to pink resorufin increased with increasing concentration of H4IIE cells (cf. Figure 7).

### Example 4: Protein detection assay

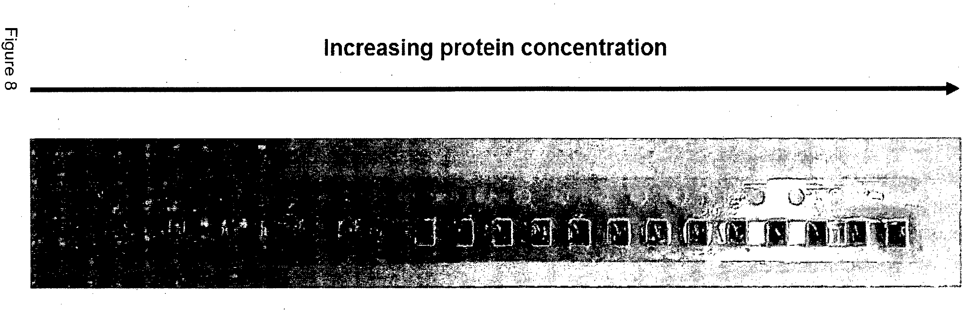

Samples of different concentrations (2-fold serial dilutions, starting at 2 mg/mL) of bovine serum albumin (BSA) were provided in consecutive recesses (recess volume: 4 µL) of a carrier tape. To each of said recesses were added similar amounts of BCA stock solutions (commercially available as kit from Sigma-Aldrich) as the respective detection agent (for testing the BSA concentration). The recesses filled with the mixtures were sealed with a cover film. After incubation and analysis, it was observed that the concentration of the formed copper complex (purple; strong absorption at 562 nm) increased with increasing concentration of BSA (cf. Figure 8).

## Claims

1. A method of conducting continuous assays comprising the steps of
a) providing one or more samples into a recess of a carrier tape,
b) adding one or more detecting agents to the sample(s) to give a mixture,
c) sealing the mixture comprising the sample(s) and the detecting agent(s) with a cover film,
d) incubating the sealed mixture,
e) analyzing the sealed and incubated mixture by detections means.

2. The method according to claim 1, wherein the sample(s) in step a) is/are selected from the group consisting of water samples, pharmaceutical samples, chemical samples, complex samples, and/or pathogens.

3. The method according to claim 2, wherein the detecting agent(s) in step b) is/are selected from the group consisting of eukaryotic cells, bacteria, and/or fungi.

4. The method according to claim 1, wherein the sample(s) in step a) is/are selected from the group consisting of samples taken from a mammal, samples taken from biotechnological processes, bacterial samples, fungal samples, and/or eukaryotic samples.

5. The method according to claim 4, wherein the detecting agent(s) in step b) is/are selected from the group consisting of dyes and/or chemical complexes.

6. The method according to any one of claims 1 to 5, wherein the carrier tape and the cover film are independently formed from materials selected from the group consisting of polymeric materials and metal foil.

7. The method according to claim 6, wherein the carrier tape and the cover film are independently formed from thermoplastic polymeric materials selected from the group consisting of polyesters, polycarbonate, polystyrene, polyvinyl chloride, acrylonitrile-butadiene-styrene, amorphous polyethylene terephthalate, polyamides, polyolefins, modified poly(phenylene ether), polyurethanes, polydimethylsiloxane, and/or polyolefin copolymers.

8. The method according to any one of claims 1 to 7, wherein the mixture comprising the sample(s) and the detecting agent(s) is pressure-sealed in step c).

9. The method according to any one of claims 1 to 8, wherein the sample(s) are incubated in step d) at a temperature from 4°C to 95°C for a duration of 1 s to 120 h.

10. The method according to any one of claims 1 to 9, wherein the detection means in step e) is/are selected from the group consisting of UV-Vis detectors, fluorescence detectors, luminescence detectors, and/or microscope cameras.

11. The method according to any one of claims 1 to 10, wherein the assay is a bioassay.
